Europäisches Patentamt

European Patent Office

Office européen des brevets

(11) Publication number: **0 375 293 A2**

# EUROPEAN PATENT APPLICATION

(21) Application number: 89313140.9

(51) Int. Cl.5: **G02F 1/1335**

(22) Date of filing: **15.12.89**

(30) Priority: **15.12.88 JP 315079/88**
**08.06.89 JP 144079/89**

(43) Date of publication of application:
**27.06.90 Bulletin 90/26**

(84) Designated Contracting States:
**DE FR GB IT NL**

(71) Applicant: **TAMA DENKI KOGYO KABUSHIKI KAISHA**
**15-12 2-Chome Nakane Meguro-ku**
**Tokyo-to(JP)**

(72) Inventor: **Takahashi, Takeshi**
**23-11 5-chome Nishifucho**
**Fuchu-shi Tokyo-to(JP)**
Inventor: **Ohtsuki, Hiroshi**
**16-4, 2-chome Miyamachi**
**Fuchu-shi Tokyo-to(JP)**

(74) Representative: **Warren, Keith Stanley et al**
**BARON & WARREN 18 South End Kensington**
**London W8 5BU(GB)**

(54) **Back-lighting apparatus for screen.**

(57) A back-lighting apparatus for a screen, such as is used for various kinds of display devices, especially that for liquid crystal display panels of word processors, personal computers, television sets and instrument panels. The apparatus comprises a lamp house (31) having a front display pannel (33) illuminated by light sources (32) arranged at the inside of the side walls of the lamp house (31). A light reflective surface (34) is provided inside a back plate of the lamp house (31) which is opposite to the front display panel (33), and a light diffuser (35) is pro-
vided between the front display panel (33) and light reflective surface (34),separating the light sources (32) from the display panel (33). Most of the direct light emitted by the light sources (32) is blocked by the light diffuser (35) and reflected uniformly onto the light reflective surface (34), after which the light permeates the light diffuser (35) to diffuse uniformaly, thus illuminating the front display panel (33) with a sufficient and uniform distribution of brightness.

FIG.2

# BACK-LIGHTING APPARATUS FOR SCREEN

This invention relates to back-lighting apparatus for screens for various kinds of display devices, especially that for the liquid crystal display panel of word processors, personal computers, television sets and instrument panels.

The conventional back-lighting apparatus for the liquid crystal display panel described above having a light source such as a spherical lamp or LED has a system as shown in Fig. 14, and the back-lighting apparatus having a cylindrical light source such as a fluorescent lamp adopts a system as shown in Fig. 15 or Fig. 16 respectively.

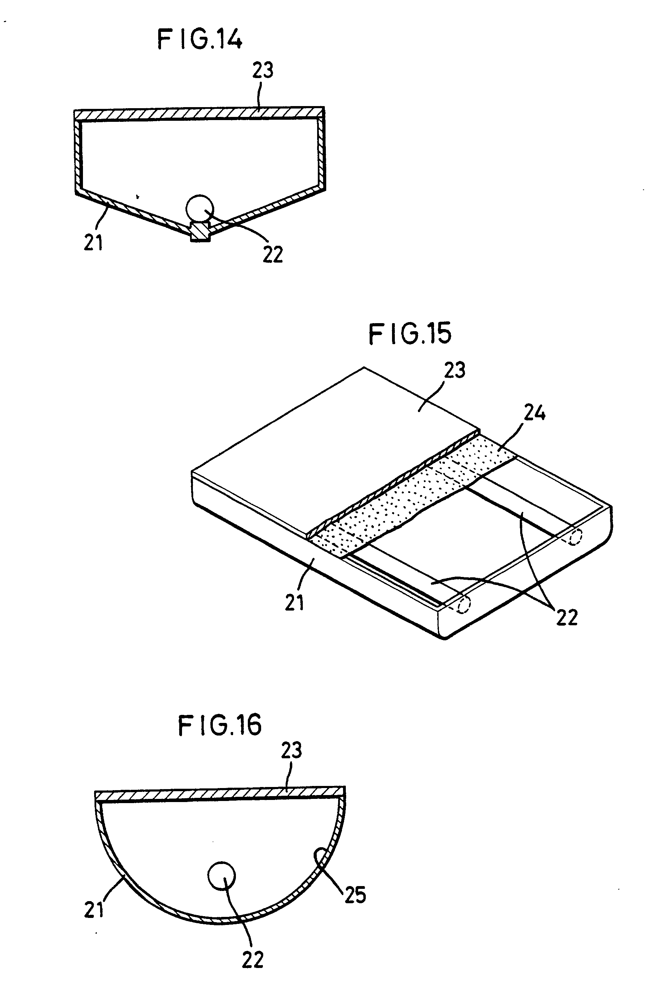

In other words, the system indicated in Fig. 14 is designed to illuminate the front display panel 23 with the light beam emitted by the spherical light source 22, with those illustrated in Figs. 15, 16 being designed to illuminate the front display panel 23 with the light beam emitted by the cylindrical light sources 22, but any of the three systems has the following drawbacks.

In the system indicated in Fig. 14, the light source 22 lies right under the front display panel 23, thus bringing about such drawbacks as uneven brightness on the front dislay panel 23 and thickening of the back-lighting apparatus in design.

The system indicated in Fig. 15 has a dot pattern screen 24 between the cylindrical light source 22 and the front display panel 23 as a means to correct uneven brightness on the front display panel 23 which occurs when the light emitted by the cylindrical light source 22 installed in the lamp house 21 is thrown directly to the front display panel 23. The system indicated in Fig. 16 has a semi-cylindrical lamp house 21, the back plate at the opposite end of the front display panel 23 having aluminum film deposited on the concave surface of its inside to use it as the concave reflective surface 25, whereby a lightbeam is reflected to the front display panel 23.

The system indicated in Fig. 15, however, poses problems such as high manufacturing cost of the dot pattern screen 24 and demand for high accuracy in installing said dot pattern screen 24, and also it has a drawback that the light beam emitted from the light source 22 cannot be efficiently used because the light cast to the front display panel 23 is suppressed by the dot pattern screen 24. The system indicated in Fig. 16 has a drawback that it is difficult to reduce the thickness of the back-lighting apparatus to less than 20 mm because of the limitation that it has a combination of a semi-cylindrical structure and a light source positioned just under the front display panel 23.

Thus, it is a first object of the invention to provide a back-lighting apparatus for a screen that has a sufficient brightness and uniform distribution of brightness.

It is a second object of the invention to provide a back-lighting apparatus for a screen capable of reducing thickness in design.

It is a third object of the invention to provide a back-lighting apparatus for a screen inexpensive and simple in structure.

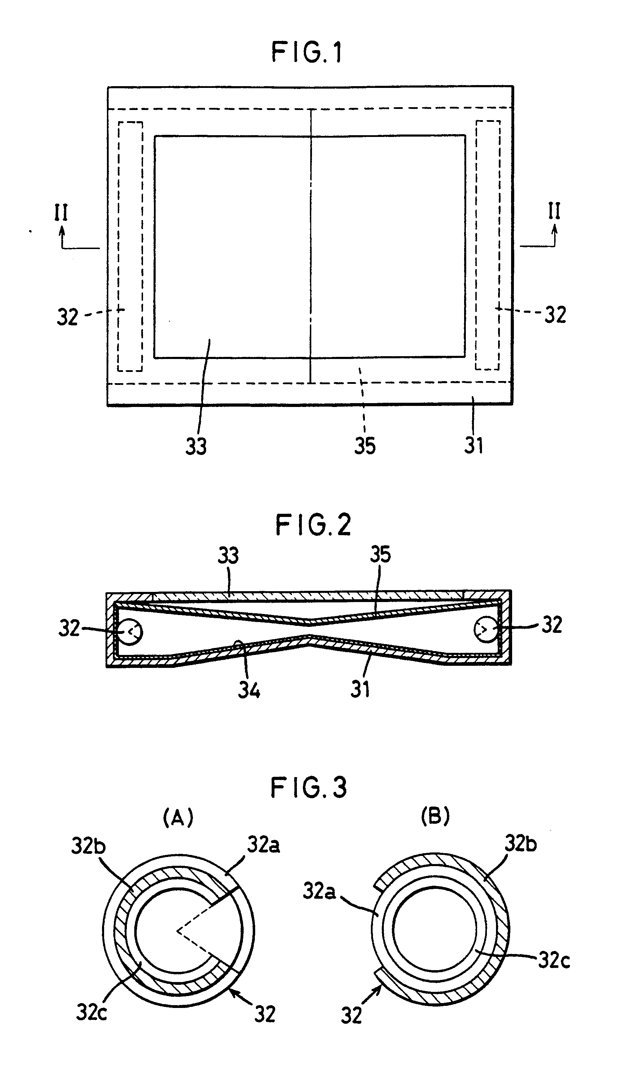

Fig. 1 is a plan view illustrating the first example of a back-lighting apparatus for a screen according to the invention,

Fig. 2 is a transverse sectional view along the arrows II-II of Fig. 1,

Fig. 3 (A), (B) are transverse sectional views of special cylindrical light sources respectively suitable for a back- lighting apparatus for a screen of the invention,

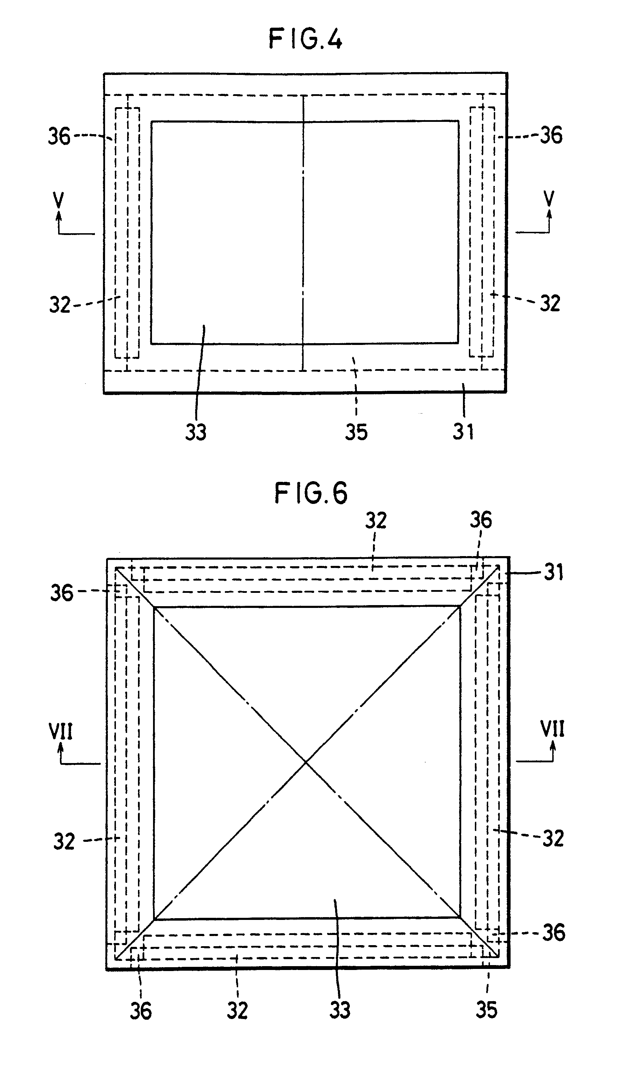

Fig. 4 is a plan view illustrating the second example,

Fig. 5 is a transverse sectional view along the arrows V-V of Fig. 4,

Fig. 6 is a plan view illustrating the third example,

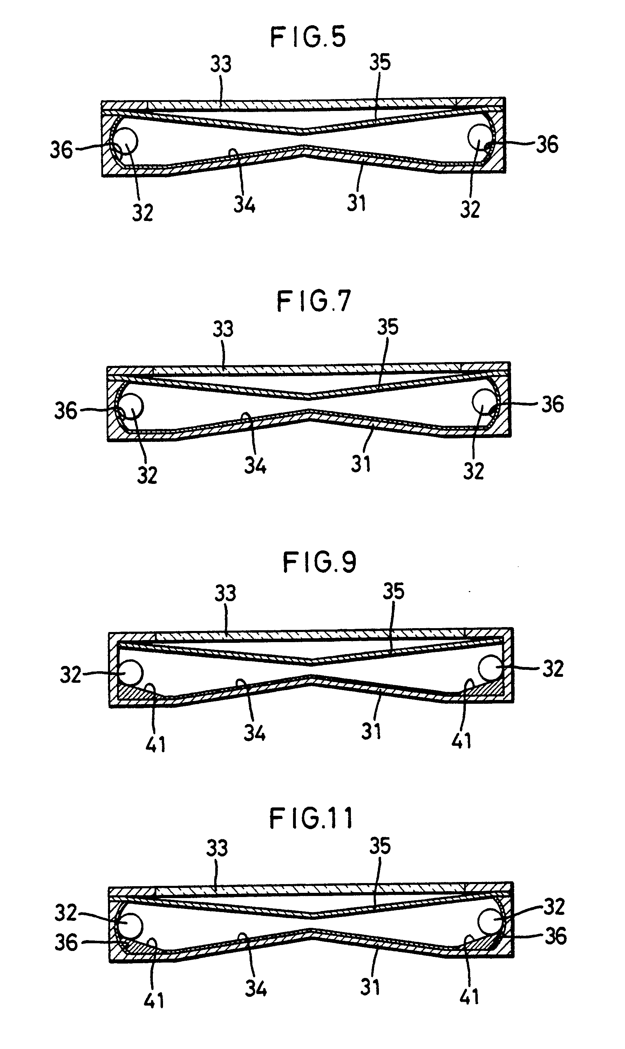

Fig. 7 is a transverse sectional view along the arrows VII-VII of Fig. 6,

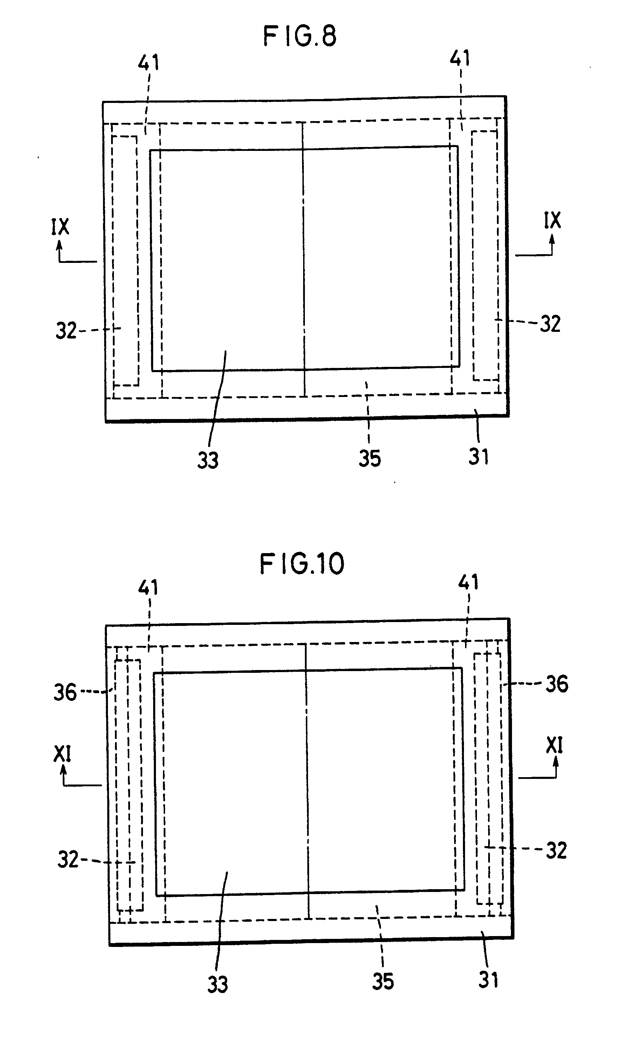

Fig. 8 is a plan view illustrating the fourth example,

Fig. 9 is a transverse sectional view along the arrows XI-IX of Fig. 8,

Fig. 10 is a plan view illustrating the fifth example,

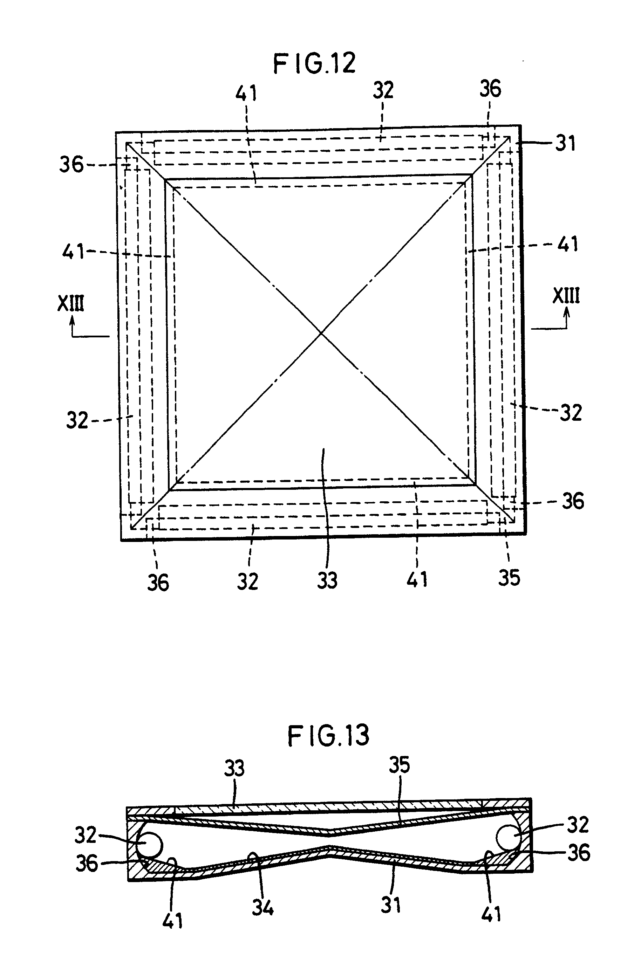

Fig. 11 is a transverse sectional view along the arrows XI-XI of Fig. 10,

Fig. 12 is a plan view illustrating the sixth example,

Fig. 13 is a transverse sectional view along the arrows XIII-XIII of Fig. 12, and,

Figs. 14 through 16 show structures of conventional back-lighting apparatus for screen respectively.

The first example shown in Figs. 1 and 2 has, as a basic structure, light sources 32 at the insides of more than one of the four side walls for forming the lamp house 31, a light reflective surface 34 being located at the inside of the back plate which is opposite to the front display panel 33 of the lamp house 31, and a light diffuser 35 being installed in the space between the front display panel 33 and the light reflective surface 34 in such a way that it separates said space to specifically locate the light sources 32 at the side of the light reflective surface 34.

By so doing, even if the light sources 32 themselves are placed eccentrically near the inside of the side wall but not in the middle of the lamp house 31, most of the direct light beam emitted from the light sources 32 is blocked by the light diffuser 35 separating the front display panel 33, and reflected uniformly on the light reflective surface 34 at the inside of the back plate, after which the light beam permeates the light diffuser, thus illuminating the front display panel 33 with sufficient brightness and uniform distribution of brightness.

The shape of the lamp house does not particularly matter. But in making the back-lighting apparatus for screens to be used for the liquid crystal display panel for the word processor, personal computer, television set and instrument panel, it is appropriate to have a lamp house made into a thin, substantially parallelepipedic shape.

There is also no particular restriction on the material of the lamp house 31, but it is appropriate to mold it with synthetic resin such as ABS resin.

The alternate long and short dash lines in Figs. 1, 4, 8 and 10 represent a virtual line which shows a bisector of the light diffuser 35 looking from both light sources 32, 32.

Although the shape of the light source 32 may be either spherical or cylindrical, it is appropriate to have usually a cylindrical light source such as a hot cathode-ray tube (fluorescent tube) or cold cathode-ray tube.

It is generally appropriate that the light sources 32 are located at the inside of the side walls forming the lamp house 32, but when the light sources are of the spherical type, it is especially advisable to have them at the inside of each corner made up of two adjacent side walls of the four side walls forming the lamp house.

As a special light source, it is effective to use a light source which is equipped with a light reflective film (light reflective layer) at the side facing the side wall of the lamp house in efficiently casting the light beam from the light source.

Fig. 3 (A), (B) show the structure of the light sources 32 in the concrete. In Fig. 3 (A), 32a is a glass tube forming the cold cathode-ray tube, 32b is a light reflective film layer provided at the inside of the cold cathode-ray tube, and 32c is a fluorescent film layer provided at the inner side of the glass tube, with part of the light reflective film layer 32b and the fluorescent film layer 32c missing at an angle of about 70 degrees. This missing angle may be about 180 degrees.

Needless to say, a special cold cathode-ray tube embodied in the transverse sectional view in Fig. 3 (B) can be used instead of the special cathode-ray tube as described above.

The special cold cathode-ray tube shown in Fig. 3 (B) is provided with the light reflective film layer 32b at the outside of the glass tube 32a and the fluorescent film layer 32c at the inside of the glass tube 32.

The light reflective surface 34 has an inverted V-type ridgy convex toward the front display panel within an altitudinal difference of plus and minus of 4.5 mm in the middle between both light sources.

With the view to improving the mirror properties and adhesive strength, the light reflective surface was treated as follows: the surface was first given an undercoat; then aluminum, which provides high reflectance,was deposited by evaporation method; and on top of it, the surface was top coated with transparent resin as a surface protective layer.

The light reflective surface 34 is intended to throw back the light beam from the light sources 32 or the light beam emitted through the light refractor by the light source 32, to the front display panel 33 of the lamp house 31 uniformly.

Therefore, the material or shape of the light reflective surface does not matter.

It is necessary to locate the light reflective surface 34 at the inside of the back plate which lies at the opposite end of the front display panel 33 of the lamp house 31, but needless to say, it does not matter whether the inside surface itself of the back plate forming the lamp house 31 is planished for this purpose or whether a separate light reflective surface is installed at the inside of the back plate forming the lamp house 31.

In order to achieve uniform distribution of brightness on the front display panel 33, one of the objects of this invention, more effectively, it is desirable to have the light reflective surface 34 made convex toward the front display panel 33 so that the light beam reflected by the light reflective surface 34 securely reaches a proper site of the front display panel 33 (usually the center of the front display panel) at a distance from the light source.

It is therefore preferable that the light reflective surface 34 is convex along the center line drawn between both light sources 32, showing a gradual descent toward both light sources 32 if two light sources 32 are used, that is, if a pair of light sources are provided at the insides of two opposed side walls of the four side walls forming the lamp house 31.

When four light sources 32 are used, that is, when four light sources are provided at the insides of the four side walls forming the lamp house 31, respectively, it is appropriate that the light reflective surface 34 is convex in the middle area at regular interval from the four light sources 32, showing a gradual descent toward each light source 32.

By taking such an arrangement, the light reflected by the light reflective surface 34 illuminates the whole front display panel 33 of the lamp house 31 with sufficient brightness and uniform distribution of brightness more effectively.

Moreover, it is also effective to make the light reflective surface 34 like Fresnel lens in both reducing the volume and weight of the entire backlighting apparatus for screen and in ensuring the reach of the reflected light to the proper site of the front display panel 33 away from the light source 32.

In other words, a Fresnel reflective surface -- a plate-like relfector with serrations on the reflective surface --may be used as the light reflective surface of this invention. In this case, the above object can be effectively attained by providing many serrations on the light reflective surface in such a way that the tilting angles of the serrations are devised to allow more of the reflected light to reach the area of the front display panel 33 which is away from the light sources.

It is effective to have a light diffuser 35 between the front display panel 33 and the light reflective surface 34 at the inside of the back plate of the lamp house 31 in attaining more even distribution of brightness on the front display panel 33 of the lamp house 31.

It particularly does not matter what kind of light diffuser 35 is to be used because the light diffuser is intended to ensure even distribution of brightness on the front display panel 33 by diffusing the light beam in the lamp house 31 before it illuminates the front display panel 33.

In order to effectively embody the object of the present invention, for instance, it is preferable to provide a light diffuser 35 consisting of a light-permeable plate with micro-irregularities on its one or both sides.

The light diffuser surface is given either ordered micro-irregularities with a specific directional property or disordered micro-irregularities with no specific directional property. Generally speaking, the light diffuser with ordered micro-irregularities on its surface is suitable for attaining uniform distribution of brightness on the whole front display panel by improving the brightness in a specific direction, while the light diffuser with disordered micro-irregularities on its surface is suited to improve the whole distribution of brightness in no specific direction.

In some cases, it may be effective to have a light diffuser 35 with ordered micro-irregularities on one side and disordered micro-irregularities on the other side of the light diffuser 35.

The light diffuser 35 shown in Fig. 2 consists of a 1.2mm thick, transparent acrylic resin plate (the surface facing the light reflective surface 34) with inumerable disordered irregularities on it, and has a V-type valley-like convex toward the light reflective surface 34 within an altitudinal difference of plus and minus of 5.5 mm in height at the area facing the ridgy convex of the light reflective surface 34.

The present invention is characterized in that the light diffuser 35 described above is provided in the space between the front display panel 33 and the light reflective surface 34 at the inside of the back plate in such a way that it separates said space with the light sources 32 near the light reflective surface 34.

By so doing, as explained before, even if the light sources 32 themselves are placed eccentrically near the inside of the side wall but not in the middle of the lamp house 31, most of the direct light beam emitted from the light sources 32 is blocked by the light diffuser 35 separating the front display panel and reflected uniformly once on the light reflective surface 34 at the inside of the back plate, after which the light beam permeates the light diffuser to diffuse uniformly, thus illuminating the front display panel 33 with sufficient brightness and uniform distribution of brightness.

As the light diffuser 35 of the present invention, it is especially preferable to have a light diffuser with such a tilting surface that gets nearer the light reflective surface 34 at the inside of the back plate as it gets away from the light sources 32.

This is because when the light beam emitted from the light source 32 is converted to the reflected light on the light reflective surface 34 on the inside of the back plate, the reflected light at the area of the light reflective surface 34 near the light source 32 is strong and that at the center area at a distance from the light source is weak.

That is, in order to illuminate the front display panel in an even distribution of brightness equalizing the strong reflected light on the area of the light reflective surface 34 near the light source 32 and the weak reflected light on the area of the light reflective surface at a distance from the light source 32, the interval between the light reflective surface 34 at the inside of the back plate and the light diffuser 35 should be made greater at the area near the light source 32 and smaller at the area far away from the light source 32. Therefore, it is fit for the purpose to have a light diffuser 35 with a tilting surface that gets nearer the light reflective surface 34 at the inside of the back plate as it gets away from the light source 32.

More specifically speaking of the above, when a pair of light sources 34 are arranged at the insides of two opposed side walls of the four side walls forming the lamp house 31 (or when two light sources are used), it is most preferable to provide a light diffuser 35 presenting a tilting surface (plain or curved surface) which is the closest to the light reflective surface 34 near the center line drawn between the two opposed light sources 32.

The back-lighting apparatus for screen of the Example 1 composed as such was lighted with a power of 7.2 W for each cold cathode-ray tube. As a result, the brightness on the front display panel 33 measuring 140 mm in width and 230 mm in length was a maximum of 940 cd/m² and a minimum of 800 cd/m², indicating that the distribution difference of brightness was within about plus and minus of 8%.

For comparison's sake, the brightness distribution of the conventional back-lighting apparatus for screen shown in Fig. 15 was measured. The maximum brightness was 650 cd/m² and the minimum brightness 470 cd/m², with the distribution difference of brightness standing at about plus and minus of 16%.

The brightness distribution of the conventional back-lighting apparatus for screen shown in Fig. 16 was also measured. The maximum brightness was 540 cd/m² and the minimum brightness 400 cd/m², with the distribution difference of brightness standing at about plus and minus of 16%.

The above measurements were all performed with Minolta model CS-100 color-difference meter. The measurements of brightness distribution on the following examples were also performed with the same instrument.

The Example 2 shown in Figs. 4 and 5 adopts the construction in which two cylindrical light sources 32 are arranged at the insides of two opposed side walls of the four side walls forming the lamp house 31.

This Example is the same as Example 1 except that as a pair of cylindrical light sources 32, 32, two Elbum model FLE6-270AE cold cathode-ray tubes were used; concave reflectors 36, 36 presenting a concave toward the cylindrical light sources 32, 32 are additionally provided between the two light sources 32, 32 and the side walls forming the lamp house 31.

The concave light reflector 36 is located between the side wall making up the lamp house 31 and the light source 32, presenting a concave surface toward the light source 32.

The concave light reflector 36 is not an essential component in all embodiments of the present invention, but this component, if installed, throws back the light emitted from the light source 32 toward the middle of the lamp house, so that the light from the light source 32 is effectively directed to the light reflective surface 34 on the inside of the back plate, thus further improving the brightness of the front display panel 35.

The back-light apparatus for screen of the Example 2 composed as such was lighted with a power of 7.2 W for each cold cathode-ray tube. As a result, the brightness on the front display panel measuring 140 mm in width and 230 mm in length was a maximum of 910 cd/m² and a minimum of 780 cd/m², indicating that the distribution difference of brightness was within about plus and minus of 8%.

The Example 3 shown in Figs. 6 and 7 has four cylindrical light sources 32 at the insides of the four side walls forming the lamp house 31. The components of the back-lighting apparatus for screen in the Example 3 are basically the same as in the case of Example 2.

However, Example 3 is different from Example 2 in that: as light sources 32, Elbum model FLE6-270AE cold cathode-ray tubes are provided at the insides of the four walls forming the lamp house 31; the number of concave reflectors 36 is increased to 4; and the shapes of the light reflective surfaces 34 and light diffusers 35 are changed.

That is, the light reflective surface 34 in this Example has a quadrangular pyramid-like convex toward the front display panel 33 within an altitudinal difference of 4.5 mm at around the middle (intersection of the two diagonal lines of the light reflective surfaces 34) of the four light sources 32. The light diffuser 35 has an inverse quadrangular pyramid-like convex toward the light reflective surface 34 within an altitudinal difference of 5.5 mm at the area facing the quadrangular pyramid-like convex of the light reflective surface 34.

When two pairs of light sources are provided at the insides of the four side walls forming the lamp house 31 (or when four light sources are used), it is preferable to have a light diffuser presenting a tilting surface (plain or curved surface) which is the closest to the light reflective surface at around the intersection of the two center lines connecting the two light sources arranged at opposite ends (or near the intersection of two diagonal lines on the light reflective surface).

The back-lighting apparatus for screen composed as such was lighted with an electric power of 7.2 W for each cold cathode-ray tube. As a result, the brightness on the front display panel 33 measuring the same as in the case of Example 1 was a maximum of 1540 cd/m² and a minimum of 1320 cd/m², with the distribution difference of brightness standing at plus and minus of 7%.

Each of the Examples 4 through 6 shown in Figs. 8 through 13 illustrates the construction comprising the light reflector 41 combined with the above-described Examples 1 through 3. The Example 4 in Figs. 8 and 9 corresponds to the Example 1, the Example 5 of Figs. 10 and 11 to the Example 2, the Example 6 in Figs. 12 and 13 to the Example 3, respectively, all being the same except for installing the light reflector 41.

In each of the Examples 4 through 6, a light reflector 41 is provided in the area between the light source 32 and the light reflective surface 34, in addition to the light diffuser 35 shown in the Examples 1 through 3 mentioned above, in order to further improve uniform distribution of brightness on the front display panel 33 of the lamp house 31.

This light reflector 41 is designed to use effectively the light beam emitting downwardly (in this case, at the side of the light reflective surface) from the light sources 32 by specifically reflecting it toward the central direction of the front display panel 35. Therefore, its kind, material or shape do not particularly matter.

By so doing, even if the light sources 32 themselves are placed eccentrically near the insides of the side walls but not in the middle of the lamp house 31 light beam emitted from the light sources 32 is reflected uniformly once by the light reflective surface 34 at the inside of the back plate, thus illuminating the front display panel 33, so that the light beam emitted downwardly from the light sources 32 is reflected toward the center by the reflector 41.

Also, by so doing, the light beam near the light sources 32 is induced near the center of the front display panel 35 so as for it to be used fully with the result that the front display panel 35 is illuminated with a sufficient brightness and uniform distribution of brightness.

In order to attain the aim of the present invention more effectively together with the light diffuser 35, for example, like the light reflective surface 34, the surface itself under the light source 32 forming the lamp house 31 is planished to be used as the light reflector 41. Needless to say, a separate light reflector 41 is installed under the light source 32 forming the lamp house 31.

The Examples 4 through 6 are characterized by that the light reflector 41 described above is installed in the area under the light source 32. It is needless to say that the light reflector 41 may be concave or Fresnel or the like in shape to ensure reach of the light beam to a proper site of the front display panel 35 (usually the center of the front display panel) at a distance from the light source 32.

In the Example 4 shown in Figs. 8 and 9, the light reflective plate measuring 12 mm in width and 230 mm in length was used as the light reflector 41, and the back-lighting apparatus for screen was lighted with a power of 7.2 W for each cold cathode-ray tube. As a result, the brightness on the front display panel 33 measuring 140 mm in width and 230 mm in length was a maximum of 940 cd/m² and a minimum of 805 cd/m², indicating that the distribution difference of brightness was within about plus and minus of 7.7%.

The Example 5 shown in Figs. 10 and 11 is the same as Example 4 except that Toshiba Litech cold cathode-ray tubes ⌀ 6.5 x 270 EX not painted were used and that concave reflectors 36, 36 presenting a concave toward the cylindrical light sources 32, 32 are additionally provided between the two light sources 32, 32 and the side walls forming the lamp house 31.

The back-lighting reflective apparatus for screen in Example 5 composed as such was lighted with a power of 7.2 W for each cold cathode-ray tube. As a result, the brightness was a maximum of 915 cd/m² and a minimum of 780 cd/m², indicating that the distribution difference of brightness was within about plus and minus of 7.9%.

The Example 6 shown in Figs. 12 and 13 is different from the Example 5 in that: Toshiba Litech cold cathode-ray tubes ⌀ 6.5 x 270 EX not painted were used; they were installed at each inside of the front surfaces of the four side walls forming the lamp house 31; the number of the concave reflector 36 was increased to 4; shapes of the light reflective surface 34 and light diffuser 35 were changed.

The back-lighting apparatus for screen in the Example 6 composed as such was lighted under the same conditions as that of the Example 5. As a result, the brightness was a maximum of 1560 cd/m² and a minimum of 1330 cd/m², indicating that the distribution difference of brightness was within about plus and minus of 8%.

## Claims

1. A back-lighting apparatus having a display panel (33) at the front of a lamp house (31), light sources (32) arranged on the inside of one or more side walls of the lamp house (31), and a light reflective surface (34) inside a back plate which is opposite to the front display panel (33) of the lamp house (31), characterized in that a light diffuser (35) is installed in the space between the front display panel (33) and the light reflective surface (34) and between the front display panel (33) and the light sources (32).

2. Apparatus as claimed in claim 1, characgterized in that the light sources (32) are cylindrical light sources disposed in opposed positions and in substantially mutually parallel relation within the lamp house (31), and the light diffuser (35) has an inclined surface which is closest to the light reflective surface (34) adjacent a notional center line extending parallel to the opposed light sources (32).

3. Apparatus as claimed in claim 1, characterized in that the light sources (32) are cylindrical light sources arranged in two pairs of opposed light sources, the light sources of each pair being disposed in substantially mutually parallel relation within the lamp house (31), and in that the light diffuser (35) has an inclined surface which is closest to the light reflective surface (34) adjacent the intersection of two notional center lines extending parallel to the pairs of light sources (32), respectively.

4. A back-lighting apparatus having a display panel (33) at the front of a lamp house (31), light sources (32) arranged on the inside of one or more side walls of the lamp house (31), and a light reflective surface (34) inside a back plate which is opposite to the front display panel (33) of the lamp house (31), characterized in that a light reflector (41) is installed in the space between the light sources (32) and the light reflective surface (34) such that it reflects light emitted from the light sources (32) to the central region of the front display panel (33).

5. Apparatus as claimed in claim 4, characterized in that the light sources (32) are cylindrical light sources disposed in opposed positions and in substantially mutually parallel relation within the lamp house (31), and the light reflector (41) has an inclined surface which reflects light emitted from the light sources (31) to the front display panel (33) above a notional central line extending parallel to the cylindrical light sources (32).

6. Apparatus as claimed in claim 4, characterized in that the light sources (32) are cylindrical light sources arranged in two pairs of opposed light sources, the light sources of each pair being disposed in substantially mutually parallel relation within the lamp house (31), and in that the light reflector (41) has an inclined surface which reflects light emitted from the light sources (32) to the front display panel (33) above two central notional lines extending parallel to the two pairs of opposed cylindrical light sources (32).

7. Apparatus as claimed in any one of the preceding claims, characterized in that a concave reflective mirror (36) having its concave surface facing the light sources (32) is installed between the one or more side walls and the light sources (32).

8. A back-lighting apparatus as claimed in any one of the preceding claims, characterized in that the lamp house (31) is generally parallelepipedic.

# FIG.1

32 --- 32

32 --- 32

33  35  31

# FIG.2

33  35

32 --- 32

34  31

# FIG.3

(A)  (B)

32b  32a

32a  32b

32c  32c

32c  32

32

## FIG.4

## FIG.6

FIG.5

FIG.7

FIG.9

FIG.11

# FIG.8

41          41

IX          IX

32 —            — 32

33      35      31

# FIG.10

41          41

36 —            — 36

XI          XI

32 —            — 32

33      35      31

# FIG.12

# FIG.13

FIG.14

FIG.15

FIG.16